# EUROPÄISCHE PATENTSCHRIFT

(11) **EP 0 394 863 B1**
(45) Veröffentlichungstag und Bekanntmachung des Hinweises auf die Patenterteilung: **21.07.1993**
(21) Anmeldenummer: 90107508.5
(22) Anmeldetag: 20.04.1990
(51) Int. Cl.: B23Q 5/26, B23Q 16/00

(54) **Vorrichtung zum Positionieren von verschiebbaren Schlitten, z. B. von Werkzeugmaschinen**
Device for positioning movable carriages e.g. on machines tools
Dispositif pour le positionnement de charriots mobiles p. ex. de machine-outil

(30) Priorität: 22.04.1989 DE 3913342
(43) Veröffentlichungstag der Anmeldung: 31.10.1990
(73) Patentinhaber: Maurus, Leonhard, D-87700 Memmingen (DE)
(72) Erfinder: Maurus, Leonhard, D-87700 Memmingen (DE)
(74) Vertreter: Pfister, Helmut, Dipl.-Ing.

(56) Entgegenhaltungen:
- DE-A- 2 030 395
- DE-A- 3 424 515
- DE-C- 3 532 300
- FR-A- 2 224 656
- VDI-ZEITSCHRIFT Band 122, Nr. 17, September 1980, Seiten 692-696, Düsseldorf, DE; J. NIEDERSTADT: "Positionieren mit pneumatischen Antrieben"
- PATENT ABSTRACTS OF JAPAN Band 12, Nr. 83 (M-677)(2930), 16. März 1988 & JP-A-62224552 (TOSHIBA CORP.) 02.10.1987

## Beschreibung

Die Erfindung betrifft eine Vorrichtung zum Positionieren von verschiebbaren Schlitten an Werkzeug- und anderen Bearbeitungsmaschinen.

Maschinenschlitten, die beispielsweise Werkzeuge tragen, die eine Bearbeitung an Werkstücken vornehmen sollen, werden häufig durch pneumatische Zylinder verstellt. Ein solcher Schlitten ist z.B. in der DE-A-3424515 beschieden. Die Verwendung des komprimierbaren Mediums Luft als Antriebsmittel bietet verschiedene Vorteile, da dieses Antriebsmittel auch für viele andere Zwecke einsetzbar ist. Der Nachteil eines derartigen komprimierbaren Mediums besteht jedoch darin, daß die genaue Positionierung des bewegten Schlittens nicht möglich ist. Es ist zwar möglich, in der Schlittenbahn Anschläge vorzusehen, an denen der Schlitten anfährt, um dadurch dem Schlitten eine genaue Position aufzwingen. Diese Anschläge können auch zurückziehbar sein. Wegen der Baugröße der Anschläge ist auf diese Weise nur eine begrenzte Anzahl von Positionen möglich, wobei jede Position aus einem zurückziehbaren Anschlag besteht. Der Platzmangel bei einer größeren Zahl von Anschlägen erschwert es auch, die angefahrene Position durch Endschalter überprüfen zu lassen. Darüberhinaus ist es schwierig, den Verfahrweg so zu unterteilen, daß der Hauptteil als Schnellgang und der Endteil als Schleichgang zurückgelegt wird.

Bei anderen Antriebsmedien, beispielsweise bei einem hydraulischen Antrieb, oder auch bei einem rein mechanischen Antrieb, läßt sich die Positionierung eines verfahrbaren Schlittens auf andere Weise durchführen. Derartige Antriebe sind aber insgesamt aufwendiger.

Das geschilderte Problem besteht nicht nur bei Schlitten, die beispielsweise Werkzeuge tragen. Auch Schlitten an Bearbeitungsmaschinen für andere Zwecke müssen aus verschiedenen Gründen exakt positioniert werden. Entsprechendes gilt auch bei Schlittenbewegungen, die der Bearbeitung selbst dienen, also beispielsweise beim Vorschub eines Bohrers während des Bohrvorgangs.

Der Erfindung liegt die Aufgabe zugrunde, eine Positioniervorrichtung für verschiebbare Schlitten zu schaffen, die ein genaues Positionieren erlaubt, auch wenn der Antrieb pneumatisch erfolgt oder der Antrieb aus anderen Gründen keine Elemente der Positioniervorrichtung aufweisen kann oder soll.

Zur Lösung dieser Aufgabe wird eine Vorrichtung der eingangs angegebenen Gattung vorgeschlagen, die gekennzeichnet durch eine rotierende Welle, deren Drehbewegung über ein Getriebe mit der Schlittenbewegung gekoppelt ist, mit einer elektromagnetischen Kupplung auf der Welle zum Ankuppeln einer hydraulischen Dämpfungseinrichtung, sowie einer Feststelleinrichtung für die Welle, und mit Schaltnocken und damit zusammenwirkenden Schaltern, zwischen den bei der Schlittenbewegung relativ zueinander beweglichen Elementen für die Schaltimpulse zur Betätigung der Kupplung und der Feststelleinrichtung.

Durch die Erfindung wird eine überraschend einfache Lösung des erfindungsgemäßen Problems erhalten. Die Schiebebewegung des Schlittens wird in eine Drehbewegung der rotierenden Welle umgesetzt, wobei die Umsetzung über ein Getriebe auf mechanischem Wege erfolgt. Jeder Umdrehung der Welle bzw. jeder Winkelbewegung der Welle entspricht ein bestimmter Vorschubweg des Schlittens. Mittels der Schaltnocken, die vorzugsweise von den als Näherungsschaltern ausgebildeten Schaltern überfahren werden, kann nun der Verschiebungsweg beliebig aufgeteilt werden. Der Hauptverschiebungsweg ist ein Schnellgang, und nach den ersten Schaltnocken wird durch die elektromagnetische Kupplung die Dämpfungseinrichtung zugeschaltet. Der Schlitten bewegt sich dadurch nur noch im Schleichgang, und dabei ist es günstig, wenn gleichzeitig auch die Vorschubkraft reduziert wird, beispielsweise dadurch, daß der Kolben des Vorschubzylinders des Schlittens auch von der Gegenseite her beaufschlagt wird. Auf diese Weise läßt sich die gesamte Vorschubenergie stark reduzieren, so daß schließlich bei der Betätigung der Feststelleinrichtung nur noch eine vergleichsweise geringe Energie aufzufangen und zu vernichten ist. Hierdurch werden harte Stöße in der Maschine vermieden, was die Genauigkeit und die Lebensdauer verbessert.

Bisher konnten vergleichsweise Positioniervorrichtungen nur unter Verwendung von computergesteuerten Einrichtungen erhalten werden, die zwar viele Variationsmöglichkeiten in sich schließen, welche aber in der Regel nur zu einem ganz kleinen Teil ausnützbar sind. Die Erfindung zeigt demgegenüber einen Weg, wie die Arbeitsfähigkeit einer Werkzeug- oder anderen Bearbeitungsmaschine wesentlich gesteigert werden kann durch Anwendung verhältnismäßig einfacher und daher robuster Mittel.

Die Feststelleinrichtung, die die Erfindung verwendet, kann in verschiedener Weise ausgestaltet sein. Insbesondere benützt die Erfindung eine Feststellbremse auf der rotierenden Welle. Die Feststellung kann aber auch in anderer Weise erfolgen, beispielsweise dadurch, daß bei der hydraulischen Dämpfungseinrichtung ein Ventil vorgesehen wird, das den hydraulischen Fluß unterbricht.

Sowohl bei der einen wie bei der anderen Variante einer Feststellvorrichtung wird der Schlitten wegen der eingeschalteten Getriebeelemente sicher festgehalten, und zwar in beiden Richtungen. Dies vereinfacht wiederum die Steuerung des Schlittenantriebs selbst. In vielen Fällen kann der Schlittenantrieb ungesteuert bleiben, wenn sichergestellt ist, daß die Vorschubkraft begrenzt bleibt.

Es ist klar, daß die Erfindung nicht nur bei einem pneumatischen Schlittenantrieb anwendbar ist, sondern auch bei anderen Schlittenantrieben Verwendung finden kann. Sie erlaubt insbesondere auch einen nachträglichen Einbau oder Anbau an vorhandene Maschinen.

Nach einem weiteren Merkmal der Erfindung besteht die Dämpfungseinrichtung aus einem von der Welle angetriebenen, in einen Zylinder eintauchenden Kolben, mit einem vorzugsweise einstellbaren Ventil in der Leitung der vom Kolben verdrängten Flüssigkeit. In diese Leitung kann beispielsweise das oben erwähnte Feststellventil eingebaut werden.

Besonders günstig ist es, wenn die Dämpfungsvorrichtung eine Rückstelleinrichtung aufweist, beispielsweise dadurch, daß im Kolben der Dämpfungseinrichtung eine Rückstellfeder angeordnet wird. Auf diese Weise wird es bei der Erfindung möglich, die Dämpfungseinrichtung, also den Schleichweg, immer wieder im Lauf einer Vorschubbewegung des Schlittens zu verwenden. Die Abmessungen der Dämpfungseinrichtung müssen nur so groß sein, wie dies dem größten gewünschten Schleichweg entspricht. Nach jedem Lösen der Kupplung gelangt die Dämpfungseinrichtung in die Ausgangslage zurück.

Im allgemeinen wird bei der Erfindung die Anordnung derart getroffen, daß beispielsweise eine Zahnstange ein Zahnrad auf der rotierenden Welle antreibt und die rotierende Welle mit den zugehörigen Einrichtungen mit dem Schlitten verschiebbar ist. Die Welle ist dabei winklig, vorzugsweise rechtwinklig zur Schlittenbewegung ausgerichtet.

Die Anordnung kann aber auch derart getroffen werden, daß die Achse der drehbaren Welle parallel zur Schlittenbewegung ausgerichtet ist und über eine Schraubspindel mit steilen Gewindegängen angetrieben ist. Die Schraubspindel darf also keine Selbsthemmung besitzen.

Günstig ist es, wenn die Schraubspindel im Kolben bzw. der Kolbenstange des Antriebszylinders des Schlittenantriebes angeordnet ist. Auf diese Weise läßt sich eine sehr kompakte Bauweise erreichen, wobei der Antrieb und die Positioniereinrichtung eine Einheit bilden.

Die Erfindung schlägt insbesondere vor, daß eine der Führungen des Schlittens eine Zahnstange aufweist für das Getriebe der Welle.

In weiterer Ausgestaltung der Erfindung ist vorgesehen, daß auf der Welle ein elektrischer Drehsignalgeber angeordnet ist. Dieser Drehsignalgeber kann beispielsweise die Aufgabe eines der anzufahrenden Schaltnockens übernehmen. Insbesondere eignet sich der Drehsignalgeber dazu, zusätzliche weitere Positionen anzufahren. Die Kombination der Schaltnocken einerseits und des Drehsignalgebers andererseits erlaubt es, den Drehsignalgeber nur bei der langsamen Vorschubbewegung einzusetzen. Bei der langsamen Vorschubbewegung fällt nur eine zeitlich begrenzte Zahl von Signalen an. Dies erlaubt den Einsatz einfacher Geräte zur Verarbeitung der abgegebenen Signale.

Günstig ist es, wenn der Arbeitszylinder des Schlittens, die rotierende Welle mit den zugehörigen Elementen, die Dämpfungseinrichtung und die Schaltnocken mit den Schaltern zu einer Baueinheit zusammengefaßt sind. Eine solche Einrichtung kann nachträglich angebaut werden, um vorhandene Maschinen mit der erfindungsgemäßen Positioniervorrichtung auszurüsten.

In der Zeichnung sind einige Ausführungsbeispiele der Erfindung schematisch dargestellt. Es zeigen:
- Fig. 1: eine Ansicht einer erfindungsgemäßen Vorrichtung,
- Fig. 2: einen Schnitt durch die Darstellung der Fig. 1 entsprechend der Schnittlinie II-II,
- Fig. 3: eine Variante für den Einbau der erfindungsgemäßen Vorrichtung,
- Fig. 4 und Fig. 4a: eine Darstellung einer anderen Einsatzmöglichkeit,
- Fig. 5 und Fig. 6: zwei Ansichten von Baueinheiten der erfindungsgemäßen Vorrichtung und
- Fig. 7: ein abgewandeltes Ausführungsbeispiel der Erfindung.

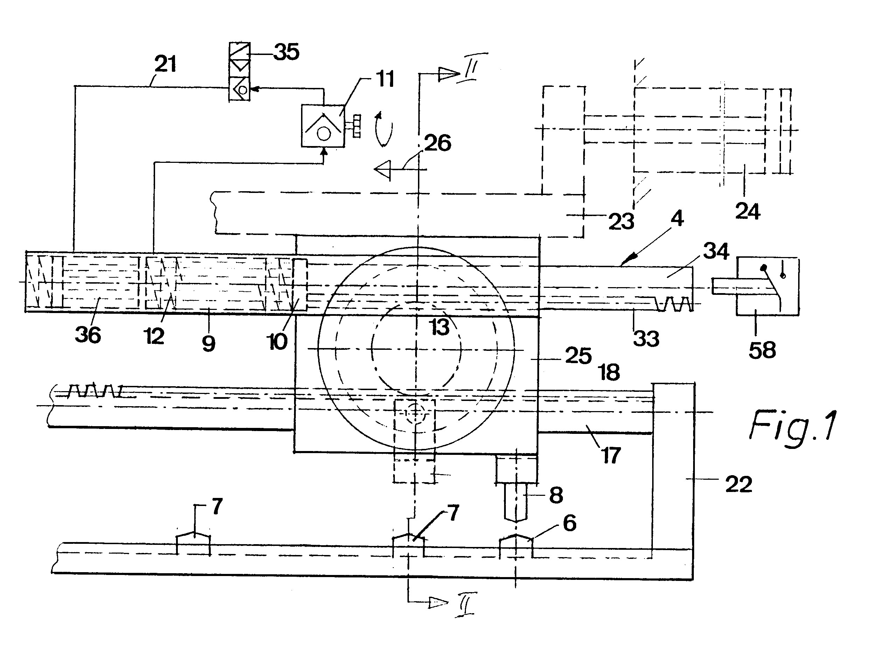

In der Fig. 1 ist an einem Maschinengestell 22 eine Führungsstange 17 gelagert, die beispielsweise Teil einer Schlittenführung ist. Weitere Führungsstangen sind nicht näher dargestellt. Der Schlitten ist mit 23 bezeichnet, und auch seine Ausbildung ist nicht näher erläutert. Der Schlitten wird durch den Arbeitszylinder 24 bewegt, der vorzugsweise pneumatisch beaufschlagt ist, und es ist klar, daß der Schlitten 23 und das Gehäuse 25, das Teil des Schlittens ist, sich in Richtung des Pfeiles 26 verschieben läßt. Auf der Führung 17 ist eine Verzahnung angeordnet, die insgesamt eine Zahnstange 18 bildet, und diese Zahnstange wirkt mit dem Zahnrad 27 zusammen, das auf der Welle 1 angeordnet ist, welche in dem Gehäuse 25 gelagert ist. Die Zahnstange 18 und das Zahnrad 27 bilden zusammen ein Getriebe 2. Bei der Bewegung des Schlittens 23 längs der Führung 17 dreht sich somit die Welle 1 um die Achse 13.

Auf der Welle 1 ist eine elektrische Kupplung 3 angeordnet. Der Anker 28 dieser Kupplung ist mit einem Zahnrad 29 starr verbunden und drehbar auf der Welle 1 gelagert. Das Ankergegenstück 30, das die Spule 32 aufnimmt, kann sich bei Beaufschlagung gegen die Kraft der Feder 31 gegen den Anker 28 bewegen. Da das Ankergegenstück unverdrehbar ist, wird bei Beaufschlagung der Anker 28 und das Zahnrad 29 mitgenommen. Das Zahnrad 29 greift in eine Zahnstange 33 ein, die in die Kolbenstange 34 eingearbeitet ist. Die Kolbenstange 34 ist Teil der hydraulischen Dämpfungseinrichtung mit dem Zylinder 9 und dem Kolben 10. Der Kolben 10 verdrängt hydraulische Flüssigkeit aus dem Innenraum des Zylinders 9 in die Leitung 21, in der das Ventil 11 und das Ventil 35 angeordnet sind. Mit 36 ist ein Aufnahme- bzw. Ausgleichsbehälter für die verdrängte hydraulische Flüssigkeit bezeichnet.

Am Gehäuse 25 sind im gezeigten Ausführungsbeispiel die Schalter 8 befestigt, die mit den Schaltnocken 6 und 7 zusammenwirken. Überfährt der Näherungsschalter 8 den Schaltnocken 6, wird beispielsweise die elektromagnetische Kupplung 3 eingeschaltet und die Dämpfungseinrichtung 4 kommt zur Wirkung. Wegen der Ventile 11 und 35 wird die Bewegung des Schlittens stark abgebremst, wobei es sich empfiehlt, gleichzeitig oder mit kurzem zeitlichem Abstand auch die Antriebskraft des Arbeitszylinders 24 zu reduzieren. Kommt der Schalter 8 in die Schaltstellung zum Schaltnocken 7, wird die elektromagnetische Bremse 5 betätigt. Die Bremse 5 ist ähnlich aufgebaut wie die Kupplung, jedoch ist das Ankergegenstück 54 starr am Gehäuse 25 gelagert und der Anker 53 unverdrehbar auf der Welle 1 befestigt. Die Bremse 5 fixiert die Welle 1, und über das Getriebe 2 auch die Bewegung des Schlittens auf der Führung 17. Wird je nach dem eingestellten Programm, nach dem die Vorrichtung arbeitet, die elektromagnetische Kupplung 3 gelöst, schiebt die Feder 12 im Zylinder 9 den Kolben 10 wieder in die Ausgangslage zurück, deren Endlage durch den Endlagenschalter 58 kontrolliert werden kann. Der Schleichgang steht für weitere Arbeitsabläufe wieder zur Verfügung, und zwar während der ganzen Bewegung des Schlittens 23 bzw. des Gehäuses 25 längs der Führung 17. Wenn also geeignete Schaltnocken am Gestell 22 vorgesehen sind, können ohne Probleme weitere Positionen angefahren werden.

Auf der Welle 1 ist ferner ein Drehsignalgeber 19 angeordnet, dessen Drehimpulse vom Sensor 57 aufgenommen und weitergeleitet werden. Dieser Drehsignalgeber eignet sich insbesondere zum Anfahren weiterer Positionierstellungen in kurzem Abstand zu einer vorher eingenommenen Position. Es kann also wahlweise mittels gesetzter Schaltnocken 6 und 7 auch mit dem Drehsignalgeber 19 gearbeitet werden.

Das Ventil 11 ist ein manuell einstellbares Geschwindigkeitsregulierventil, das die Geschwindigkeit des Schleichganges einstellbar macht. Das Ventil 35 ist ein elektromagnetisch betätigtes, fein eingestelltes Geschwindigkeitsregulierventil. In die Leitung 21 kann auch ein Absperrventil eingebaut werden, über das es möglich ist, den Kolben 10 zu fixieren, ohne daß die Bremse 5 betätigt wird. Im gezeigten Ausführungsbeispiel würde ein solches Ventil zwar keine starre Einspannung des Kolbens 10 ergeben. Es ist jedoch klar, daß ohne weiteres auch eine beidseitig wirkende hydraulische Einspannung möglich ist, wenn dies gewünscht oder notwendig ist.

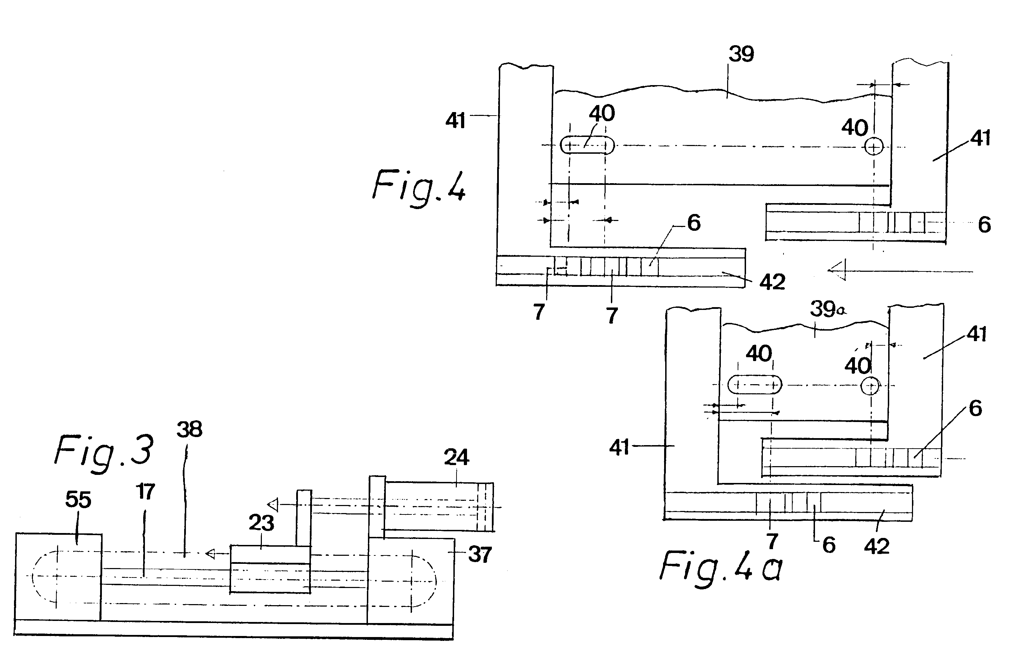

Die Darstellung der Fig. 3 zeigt eine Ausführungsform der Erfindung, bei der der Antriebszylinder 24 einen Schlitten 23 antreibt, der auf der Führung 17 verschiebbar ist. Die Positioniervorrichtung ist jedoch in dem Gehäuse 37 untergebracht und wird über einen Zahnriemen oder eine Kette 38, die vom Schlitten 23 betätigt wird, beaufschlagt. Mit 55 ist ein Gegenlager bezeichnet. Bei diesem Ausführungsbeispiel treibt dann beispielsweise die Kette 38 über ein geeignetes Kettenrad die Welle 1 an.

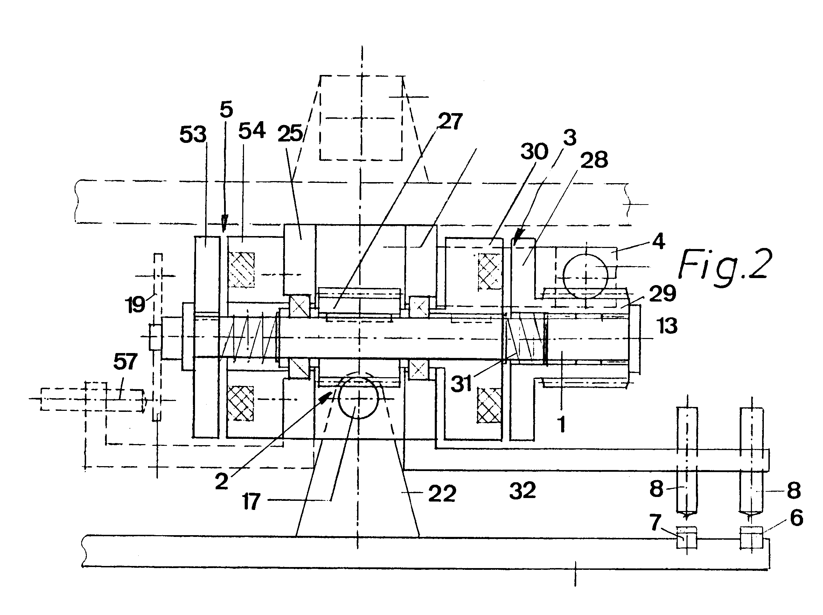

Die Fig. 4 und 4a zeigen eine Variante des Einsatzes der erfindungsgemäßen Vorrichtung. In der Fig. 4 ist das Werkstück mit 39 bezeichnet und in der Fig. 4a mit 39a. Das Werkstück 39 ist wesentlich breiter als das Werkstück 39a, besitzt jedoch ebenfalls die gleichen Bohrungen 40 usw. wie das Werkstück 39a. Der Abstand dieser Bohrungen usw. vom Rand des Werkstückes ist gleich. Die Spannbacken 41, mit denen die Werkstücke 39 bzw. 39a eingespannt sind, sind in beiden Fällen völlig gleich und mit einer Nockenleiste 42 mit den Nocken 6 und 7 versehen. Es ist klar, daß ein Werkzeugschlitten mit einem Schalter 8, wie dieser in der Fig. 1 bzw. 2 gezeigt ist, beim Zusammenwirken mit den Nocken auf den Nockenleisten 42 jeweils immer in die gewünschten Positionen zur Bearbeitung der Bohrungen 40 gelangen wird, ohne daß irgendeine besondere Einstellung der Maschine notwendig wäre.

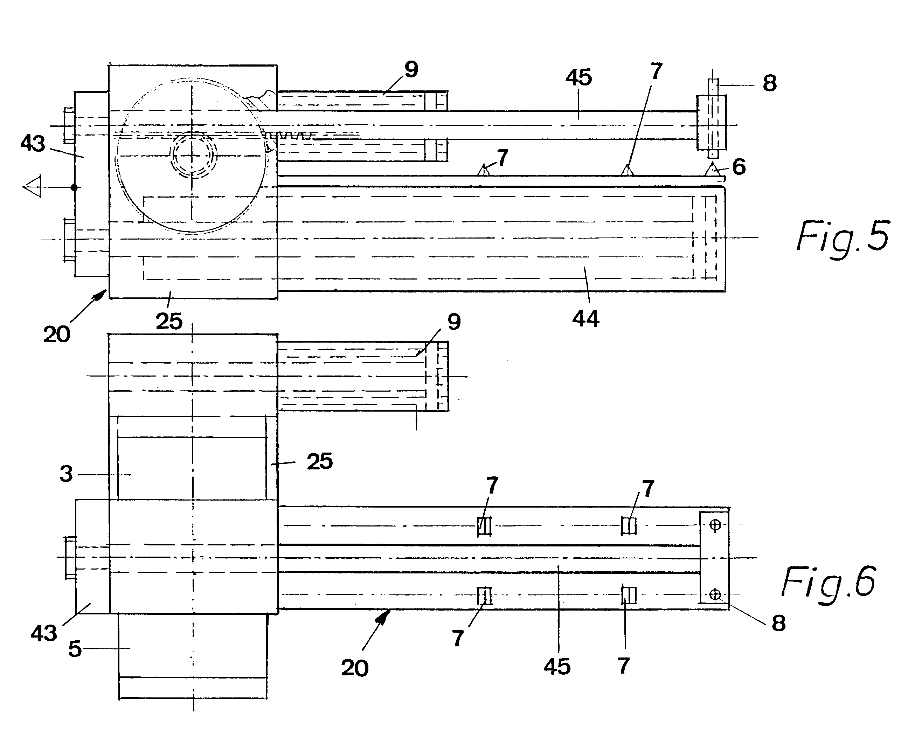

Die Fig. 5 und 6 zeigen weitere Ausführungsvarianten der beschriebenen Vorrichtung. Diese Baueinheit 20 umfaßt den Arbeitszylinder 24, der als Schlittenunterteil ausgebildet ist bzw. mit diesem verbunden werden kann. Die Grundplatte 43 dient zum Anbau an das Maschinengestell. Mit dieser Grundplatte ist die Kolbenstange 44 des Arbeitszylinder 24 verbunden. Im Gehäuse 25 ist die Welle 1 angeordnet, und der Antrieb dieser Welle erfolgt über die Zahnstange 45, die an der Grundplatte 43 befestigt ist.

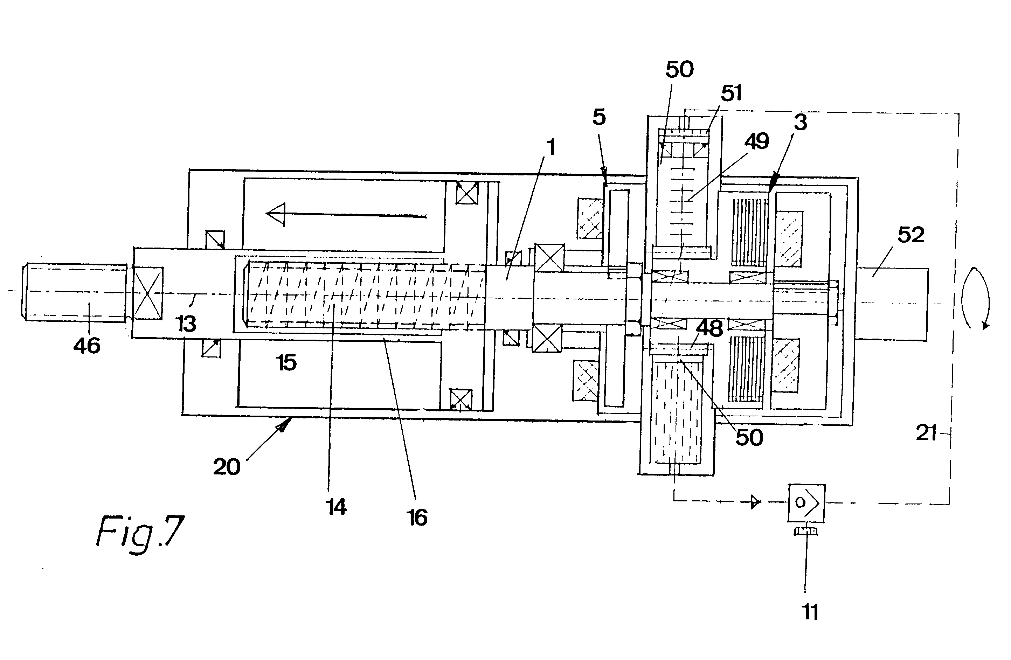

Bei der Ausführungsform nach der Fig. 7 wird die Baueinheit 20 mit dem Schraubgewinde 46 z.B. am Maschinengestell befestigt, während der Arbeitszylinder 24 mit dem Schlitten verbunden ist. Die Anordnung kann auch in umgekehrter Weise vorgenommen werden. Mit dem Schraubgewinde 46 ist die Kolbenstange 16 verbunden, in die die Schraubspindel 14 eintaucht. Die Gewindegänge 15 sind so steil, daß bei der Bewegung des Kolbens 47 im Zylinder 24 der Welle 1 eine Drehbewegung aufgezwungen wird. Es ist klar, daß hierfür geeignete Verdrehsicherungen zwischen der Kolbenstange und dem Zylinder vorgesehen sein müssen. In die Baueinheit 20 ist die Feststelleinrichtung 5 integriert, die als elektromagnetische Feststellbremse ausgebildet ist. Die elektromagnetische Kupplung ist mit 3 bezeichnet. Beim Kupplungsvorgang dreht sich das Ritzel 48, das in die Verzahnung 49 des Kolbens 50 eingreift. Dieser Kolben 50 bewegt sich mit seinem einen Ende im Zylinder 9 und mit dem anderen Ende im Ausgleichsgefäß 51. Ein etwaiger Drehsignalgeber kann im Gehäuse 52 angeordnet sein.

## Patentansprüche

1. Vorrichtung zum Positionieren von verschiebbaren Schlitten an Werkzeug- und anderen Bearbeitungsmaschinen, mit einer rotierenden Welle (1), deren Drehbewegung über ein Getriebe (2) mit der Schlittenbewegung gekoppelt ist,gekennzeichnet durch eine elektromagnetisch betätigte Kupplung (3) auf der Welle (1) zum Ankuppeln einer hydraulischen Dämpfungseinrichtung (4), sowie eine Feststelleinrichtung (5) für die Welle (1), und Schaltnocken (6,7) und damit zusammenwirkende Schalter (8) zwischen den bei der Schlittenbewegung relativ zueinander beweglichen Elementen für die Schaltimpulse zur Betätigung der Kupplung (3) und der Feststelleinrichtung (5).

2. Vorrichtung nach Anspruch 1, dadurch gekennzeichnet, daß die Feststelleinrichtung (5) von einer Feststellbremse auf der Welle (1) gebildet ist.

3. Vorrichtung nach einem oder beiden der vorhergehenden Ansprüche, dadurch gekennzeichnet, daß die Dämpfungseinrichtung (4) aus einem von der Welle (1) angetriebenen, in einen Zylinder (9) eintauchenden Kolben (10) besteht, mit einem vorzugsweise einstellbaren Ventil (11) in der Leitung der vom Kolben (10) verdrängten Flüssigkeit.

4. Vorrichtung nach einem oder mehreren der vorhergehenden Ansprüche, gekennzeichnet durch eine Rückstelleinrichtung (12) für die Dämpfungseinrichtung (4).

5. Vorrichtung nach einem oder mehreren der vorhergehenden Ansprüche, dadurch gekennzeichnet, daß die Achse (13) der drehbaren Welle (1) parallel zur Schlittenbewegung ausgerichtet ist und über eine Schraubspindel (14) mit steilen Gewindegängen (15) angetrieben ist.

6. Vorrichtung nach einem oder mehreren der vorhergehenden Ansprüche, dadurch gekennzeichnet, daß die Schraubspindel (14) im Kolben bzw. der Kolbenstange (16) des Antriebszylinders (24) des Schlittenantriebs angeordnet ist.

7. Vorrichtung nach einem oder mehreren der vorhergehenden Ansprüche, dadurch gekennzeichnet, daß eine der Führungen (17) des Schlittens eine Zahnstange (18) aufweist für das Getriebe (2) der Welle (1).

8. Vorrichtung nach einem oder mehreren der vorhergehenden Ansprüche, dadurch gekennzeichnet, daß auf der Welle (1) ein elektronischer Drehsignalgeber (19) angeordnet ist.

9. Vorrichtung nach einem oder mehreren der vorhergehenden Ansprüche, dadurch gekennzeichnet, daß der Antriebszylinder (21) des Schlittens, die rotierende Welle (1) mit den zugehörigen Elementen, die Dämpfungseinrichtung (4) und die Schaltnocken (6,7) mit den Schaltern (8) zu einer Baueinheit (20) zusammengefaßt sind.

## Claims

1. Device for positioning movable slides on machine tools and other machining apparatuses with a rotating shaft (1), the rotary movement of which is coupled with the slide movement via a gear unit (2), characterized by an electromagnetically operated clutch (3) on the shaft (1) for coupling a hydraulic damping unit (4), as well as a locking device (5) for the shaft (1) and operating cams (6,7) and, acting together with said cams, switches (8) between the elements for the switching impulses movable with respect to each other during the slide movement for actuating the clutch (3) and the locking device (5).

2. Device according to claim 1, characterized in that the locking device (5) is formed by a locking brake on the shaft (1).

3. Device according to one or both of the preceding claims, characterized in that the damping unit (4) comprises a piston (10) driven by the shaft (1) and plunging into a cylinder (9), with a preferentially adjustable valve (11) provided in the line of the liquid displaced by the piston (10).

4. Device according to one or more of the preceding claims, characterized by a resetting device (12) for the damping unit (4).

5. Device according to one or more of the preceding claims, characterized in that the axis (13) of the rotary shaft (1) is arranged parallel to the slide movement and driven by means of a screw rod (14) with threads of coarse pitch (15).

6. Device according to one or more of the preceding claims, characterized in that the screw rod (14) is arranged in the piston or the piston rod (16) of the operating cylinder (24) of the slide driving mechanism.

7. Device according to one or more of the preceding claims, characterized in that one of the guiding elements (17) of the slide has a gear rack (18) for the gear unit (2) of the shaft (1).

8. Device according to one or more of the preceding claims, characterized in that an electronic rotary transducer (19) is arranged on the shaft (1).

9. Device according to one or more of the preceding claims, characterized in that the operating cylinder (21) of the slide, the rotating shaft (1) with the associated elements, the damping unit (4) and the operating cams (6,7) with the switches (8) are assembled in one unit (20).

## Revendications

1. Dispositif pour le positionnement de chariots mobiles sur des machines-outils et autres machines d'usinage, comprenant un arbre tournant (1) dont le mouvement de rotation est couplé avec le mouvement des chariots par l'intermédiaire d'un engrenage (2), **caractérisé** **en ce** qu'il comporte un dispositif d'accouplement à commande électromagnétique (3) monté sur l'arbre (1) pour l'accouplement d'un amortisseur hydraulique (4) ainsi qu'un dispositif de blocage (5) pour l'arbre (1), des cames de contacteur (6, 7) et des commutateurs (8) coopérant avec ces dernières et placés entre les éléments mobiles les uns par rapport aux autres lors du déplacement des chariots, pour délivrer des impulsions de commande pour l'actionnement du dispositif d'accouplement (3) et du dispositif de blocage (5).

2. Dispositif selon la revendication 1, caractérisé en ce que le dispositif de blocage (5) est constitué par un frein d'immobilisation monté sur l'arbre (1).

3. Dispositif selon au moins l'une des revendications précédentes, caractérisé en ce que l'amortisseur (4) est constitué par un piston (10) entraîné par l'arbre (1) et plongeant dans un cylindre (9), avec une soupape (11) de préférence réglable insérée dans la conduite du fluide déplacé par le piston (10).

4. Dispositif selon au moins l'une des revendications précédentes, caractérisé en ce qu'il comprend un dispositif de rappel (12) pour l'amortisseur (4).

5. Dispositif selon au moins l'une des revendications précédentes, caractérisé en ce que l'axe (13) de l'arbre tournant (1) est orienté parallèlement au mouvement du chariot et entraîné par l'intermédiaire d'une broche filetée (14) à pas de vis rapide (15).

6. Dispositif selon au moins l'une des revendications précédentes, caractérisé en ce que la broche filetée (14) est montée dans le piston et respectivement dans la tige de piston (16) du cylindre d'entraînement (24) du mécanisme d'entraînement du chariot.

7. Dispositif selon au moins l'une des revendications précédentes, caractérisé en ce que l'un des guidages (17) du chariot comprend une crémaillère (18) pour l'engrenage (2) de l'arbre (1).

8. Dispositif selon au moins l'une des revendications précédentes, caractérisé en ce que l'arbre il) porte un transmetteur de signaux rotatif électronique (19).

9. Dispositif selon au moins l'une des revendications précédentes, caractérisé en ce que le cylindre d'entraînement (21) du chariot, l'arbre tournant (1) avec les éléments associés, l'amortisseur (4) et les cames de contacteur (6, 7) avec les commutateurs (8) sont groupés en une unité 20.
